# EUROPEAN PATENT APPLICATION

(11) **EP 4 247 047 A1**
(43) Date of publication of application: **20.09.2023**
(21) Application number: 21908945.5
(22) Date of filing: 16.11.2021
(51) Int. Cl.: H04W 28/02

(54) **METHOD AND APPARATUS FOR CONTROLLING WIRELESS LINKS, ELECTRONIC DEVICE, AND STORAGE MEDIUM**

(30) Priority: 21.12.2020 CN 202011519405
(71) Applicant: GUANGDONG OPPO MOBILE TELECOMMUNICATIONS CORP., LTD., Dongguan, Guangdong 523860 (CN)
(72) Inventor: XU, Chaojie, Dongguan, Guangdong 523860 (CN)
(74) Representative: Grassi, Stefano
(86) International application number: PCT/CN2021/130932
(87) International publication number: WO 2022/134945

(57) **Abstract**

The present application relates a method and apparatus for controlling wifeless links, an electronic device, and a storage medium, and belongs to the technical filed of terminals. The method comprises: in response to a first wireless link being woken up, indication information is sent on a second wireless link to an access node corresponding to the second wireless link, the indication information being used for instructing the second wireless link to exit a sleep state, or the indication information is sent to the access node, the indication information comprising first sub-information and second sub-information, wherein the first sub-information indicates status information of a wireless terminal, and the second sub-information indicates whether the wireless terminal is in a dual WiFi communication mode. The access node is enabled to synchronously issue downlink data to two wireless links, thereby reducing the latency of delivering the downlink data from the access point to the wireless links.

## Description

This application claims the priority of China Patent Application No. 202011519405.8 filed on Dec. 21, 2020, with the title "METHOD AND APPARATUS FOR CONTROLLING WIRELESS LINKS, ELECTRONIC DEVICE, AND STORAGE MEDIUM", the entire contents of which are incorporated into this application by reference.

### TECHNICAL FIELD

Embodiments of the present disclosure relates to the technical field of terminals, in particular to a method and an apparatus for controlling wireless links, an electronic device and a storage medium.

### BACKGROUND

In order to improve the throughput of wireless links and reduce network latency in wireless terminals, a dual-band Wi-Fi acceleration method is usually adopted to enable the wireless terminal to connect to two access points (APs) simultaneously. After the wireless terminal is connected to a router in the local area network (LAN), the wireless terminal and the router do not need to exchange data for most of the time. During the time when there is no data exchange between the wireless terminal and the router, the router periodically sends beacons to the two wireless links of the wireless terminal, individually. The beacon is used to indicate whether the router has downlink data to be sent to the wireless terminal. Therefore, in order to save power, the wireless links of the wireless terminal are always in a power save state, and only when the beacon indicating that the router has the downlink data to be sent to the wireless terminal is detected, the wireless terminal wakes up the wireless link corresponding to the beacon to exchange data with the router based on that wireless link.

### SUMMARY

The present disclosure provides a method and an apparatus for controlling wireless links, an electronic device, and a storage medium, which can reduce time delay for a wireless terminal to receive downlink data. The technical solutions are as follows.

In an aspect, a method for controlling wireless links in a wireless terminal is provided. The method includes:
in response to a first wireless link being woken up, sending an indication information to a second access point corresponding to a second wireless link on the second wireless link, and the indication information being configured to indicate that the second wireless link is out of a power save mode.

In another aspect, an apparatus for controlling wireless links in a wireless terminal is provided. The apparatus includes:
a sending module, configured to send, in response to a first wireless link being woken up, an indication information to a second access point corresponding to a second wireless link on the second wireless link, and the indication information being configured to indicate that the second wireless link is out of a power save state.

In another aspect, a method for controlling wireless links in a wireless terminal is provided. The method includes:
sending an indication information to an access point, the indication information including first sub-information and second sub-information, the first sub-information indicating state information of the wireless terminal, and the second sub-information indicating whether the wireless terminal is in a dual Wi-Fi communication mode.

In another aspect, a method for controlling wireless links in a first access point in a router in a dual Wi-Fi communication mode is provided. The router further includes a second access point, and the method includes:
receiving indication information from a wireless terminal; the indication information including first sub-information and second sub-information, the first sub-information indicating that the wireless terminal is out of a power save state and the second sub-information indicating that the wireless terminal is in the dual Wi-Fi communication mode.

In another aspect, a method for controlling wireless links in a second access point in a router in a dual Wi-Fi communication mode is provided. The router further includes a first access point, and the method includes:
receiving wake-up information from the first access point, the wake-up information indicating that a second wireless link of a wireless terminal corresponding to the second access point is out of a power save state.

In another aspect, an apparatus for controlling wireless links in a wireless terminal is provided. The apparatus includes:
a sending module, configured to send indication information to an access point. The indication information includes first sub-information indicating state information of the wireless terminal and second sub-information indicating whether the wireless terminal is in a dual Wi-Fi communication mode.

In another aspect, an apparatus for controlling wireless links in a first access point in a router in a dual Wi-Fi communication mode is provided. The router further includes a second access point and the apparatus includes:
a receiving module, configured to receive indication information from a wireless terminal. The indication information includes first sub-information indicating that the wireless terminal is out of a power save state and second sub-information indicating that the wireless terminal is in the dual Wi-Fi communication mode.

In another aspect, an apparatus for controlling wireless links in a second access point in a router in a dual Wi-Fi communication mode is provided. The router further includes a first access point, and the apparatus includes:
a receiving module, configure to receive wake-up information from the first access point. The wake-up information indicates that the second wireless link of the wireless terminal corresponding to the second access point is out of a power save state.

In another aspect, a wireless terminal is provided, the wireless terminal includes a processor and a memory. The memory stores at least one program code, which is configured to be executed by the processor to implement the method for controlling wireless links described above.

In another aspect, a router is provided, the router includes a processor and a memory. The memory stores at least one program code, which is configured to be executed by the processor to implement the method for controlling wireless links described above.

In another aspect, a computer-readable storage medium is provided, the computer-readable storage medium stores at least one program code, which is configured to be executed by a processor to implement the method for controlling wireless links described above.

In another aspect, a computer program product is provided, the computer program product stores at least one program code, and the at least one program code is loaded and executed by a processor to implement the method for controlling wireless links described above.

In the embodiments disclosed herein, for a wireless terminal with two wireless links, the beacon that can be received through either wireless link can synchronize and wake up the two wireless links, and notify the two access points that their corresponding wireless links have been woken up synchronously, thus the access points can synchronously send downlink data to the two wireless links, reducing the latency of sending downlink data from the access points to the wireless links.

### BRIEF DESCRIPTION OF THE DRAWINGS

FIG. 1 illustrates a schematic structural diagram of a wireless terminal according to an alternative embodiment of the present disclosure.
FIG. 2 illustrates a schematic diagram of communication of wireless links according to an alternative embodiment of the present disclosure.
FIG. 3 illustrates a schematic diagram of monitoring beacons according to an alternative embodiment of the present disclosure.
FIG. 4 illustrates a schematic diagram of sending downlink data according to an alternative embodiment of the present disclosure.
FIG. 5 illustrates a schematic diagram of sending downlink data according to an alternative embodiment of the present disclosure.
FIG. 6 illustrates a flowchart of a method for controlling wireless links according to an alternative embodiment of the present disclosure.
FIG. 7 illustrates a flowchart of a method for controlling wireless links according to an alternative embodiment of the present disclosure.
FIG. 8 illustrates a schematic diagram of sending downlink data according to an alternative embodiment of the present disclosure.
FIG. 9 illustrates a flowchart of a method for controlling wireless links according to an alternative embodiment of the present disclosure.
FIG. 10 illustrates a flowchart of a method for controlling wireless links according to an alternative embodiment of the present disclosure.
FIG. 11 illustrates a flowchart of a method for controlling wireless links according to an alternative embodiment of the present disclosure.
FIG. 12 illustrates a schematic diagram of sending downlink data according to an alternative embodiment of the present disclosure.
FIG. 13 illustrates a structural block diagram of an apparatus for controlling wireless links according to an alternative embodiment of the present disclosure.
FIG. 14 illustrates a structural block diagram of an apparatus for controlling wireless links according to an alternative embodiment of the present disclosure.
FIG. 15 illustrates a structural block diagram of an apparatus for controlling wireless links according to an alternative embodiment of the present disclosure.
FIG. 16 illustrates a structural block diagram of an apparatus for controlling wireless links according to an alternative embodiment of the present disclosure.
FIG. 17 illustrates a structural block diagram of an apparatus for controlling wireless links according to an alternative embodiment of the present disclosure.
FIG. 18 illustrates a structural block diagram of an apparatus for controlling wireless links according to an alternative embodiment of the present disclosure.
FIG. 19 illustrates a structural block diagram of an apparatus for controlling wireless links according to an alternative embodiment of the present disclosure.

### DETAILED DESCRIPTION

In order to provide a clearer understanding of the purpose, technical solutions, and advantages of the present disclosure, detailed descriptions of embodiments of the present disclosure will be provided below in conjunction with the accompanying drawings.

In this document, the term "multiple" refers to two or more. The term "and/or" describes the relationship between associated objects and indicates that there can be three types of relationships. For example, "A and/or B" can indicate that A exists alone, both A and B exist together, or B exists alone. The character "/" generally represents an "or" relationship between the associated objects.

In the embodiments of the present disclosure, the technical solutions are provided as follows.

In an aspect, a method for controlling wireless links in a wireless terminal is provided, and the method includes:
sending, in response to a first wireless link being woken up, indication information to a second access point corresponding to a second wireless link on the second wireless link. The indication information is configured to indicate that the second wireless link is out of a power save state.

In some embodiments, the method further includes:
waking up the second wireless link in response to the first wireless link being woken up.

In some embodiments, the sending indication information to a second access point corresponding to the second wireless link on a second wireless link, includes:
determining a link identifier of the second wireless link; and
sending, based on the link identification, the indication information to the second access point on the second wireless link.

In some embodiments, a process that the first wireless link is woken up includes:
receiving a beacon of the first wireless link from a first access point corresponding to the first wireless link; and
waking up the first wireless link in response to the beacon.

In some embodiments, a frequency of the first wireless link is different from that of the second wireless link.

In some embodiments, a frequency of the first wireless link is same as that of the second wireless link.

In some embodiments, the first wireless link is a 2.4G wireless link, and the second wireless link is a 5G wireless link; or the first wireless link is a 5G wireless link, and the second wireless link is a 2.4G wireless link.

In some embodiments, the method further includes:
receiving information from the second access point on the second wireless link.

In another aspect, a method for controlling wireless links in a wireless terminal is provided, and the method includes:
sending indication information to an access point; the indication information includes first sub-information and second sub-information, the first sub-information indicates state information of the wireless terminal, and the second sub-information indicates whether the wireless terminal is in a dual Wi-Fi communication mode.

In some embodiments, when the wireless terminal is in the dual Wi-Fi communication mode, the sending the indication information to the access point includes:
sending, in response to a predetermined condition is met, the indication information to the access point; the indication information includes the first sub-information and the second sub-information, the first sub-information indicates that the wireless terminal is out of a power save state, and the second sub-information indicates that the wireless terminal is in the dual Wi-Fi communication mode.

In some embodiments, the predetermined condition includes:
waking up a wireless link through the access point; or
waking up the wireless link through the access point and sending downlink data to the wireless link through the wireless link; or
actively waking up the wireless link through the wireless terminal.

In some embodiments, the sending indication information to an access point further includes:
sending the indication information to the access point in response to the wireless terminal determining to enter a power save state; the first sub-information indicates that the wireless terminal enters the power save state, and the second sub-information indicates whether the wireless terminal is in the dual Wi-Fi communication mode.

In another aspect, a method for controlling wireless links in a first access point in a router in a dual Wi-Fi communication mode is provided, the router further includes a second access point, and the method includes:
receiving indication information from a wireless terminal; the indication information includes first sub-information and second sub-information, the first sub-information indicates that the wireless terminal is out of a power save state, and the second sub-information indicates that the wireless terminal is in the dual Wi-Fi communication mode.

In some embodiments, before the receiving indication information from the wireless terminal, the method further includes:
allocating a first identifier to the wireless terminal through a first wireless link; and
sending the first identifier to the second access point, and receiving a second identifier allocated to the wireless terminal by a second wireless link from the second access point.

In some embodiments, the method further includes:
sending wake-up information to the second access point, which indicates that the second wireless link is out of the power save state.

In another aspect, a method for controlling wireless links in a second access point in a router in a dual Wi-Fi communication mode is provided, the router further includes a first access point, and the method includes:
receiving wake-up information from the first access point; the wake-up information indicates that a second wireless link of the wireless terminal corresponding to the second access point is out of a power save state.

In some embodiments, before the receiving wake-up information from the first access point, the method further includes:
allocating a second identifier to the wireless terminal through a second wireless link; and
sending the second identifier to the first access point, and receiving a first identifier allocated to the wireless terminal by a first wireless link from the first access point.

In some embodiments, the method further includes:
sending information to the wireless terminal in the second wireless link.

In the embodiment of the present disclosure, for a wireless terminal with two wireless links, a beacon received through either wireless link can synchronously wake up the two wireless links, and synchronously notify the two access points that the corresponding wireless links have been woken up, thus the access points can synchronously send downlink data to the two wireless links, thus reducing the latency of sending downlink data from the access points to the wireless links.

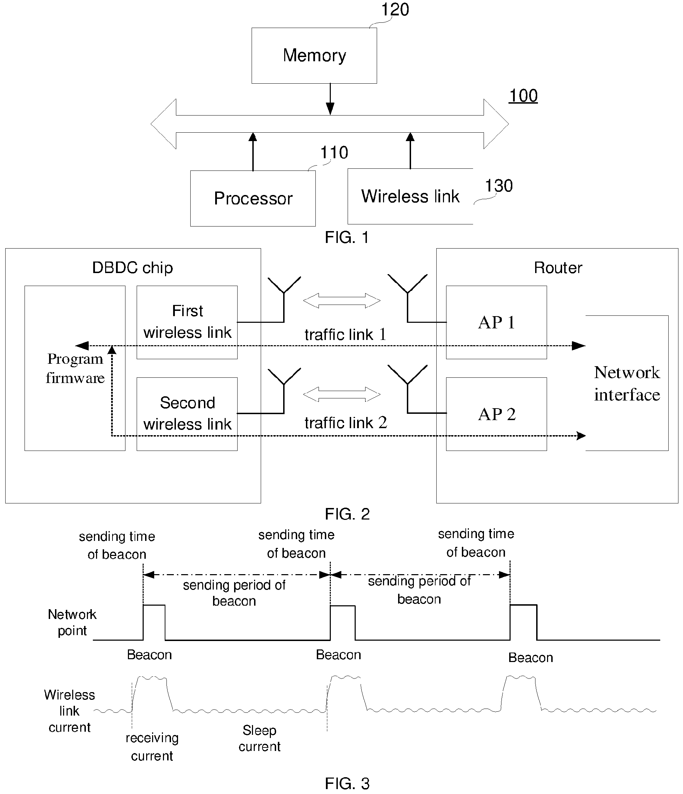

In an embodiment of the present disclosure, an electronic device includes a wireless terminal and a router. As illustrated in FIG. 1, which illustrates a structural block diagram of a wireless terminal 100 according to an alternative embodiment of the present disclosure. In some embodiments, the wireless terminal 100 may be a wireless terminal capable of accessing a wireless local area network (WLAN) as a wireless station, such as a smartphone, a tablet, a wearable device, and the like. The wireless terminal 100 of the present disclosure includes at least one or more of the following components: a processor 110, a memory 120, and at least two wireless links 130.

In some embodiments, the processor 110 includes one or more processing cores. The processor 110 uses various interfaces and lines to connect various parts within the wireless terminal 100 and executes various functions and processes data of the wireless terminal 100 by running or executing program codes stored in the memory 120 and calling data stored in the memory 120. In some embodiments, the processor 110 is implemented in at least one hardware form of digital signal processing (DSP), field-programmable gate array (FPGA), and programmable logic array (PLA). The processor 110 may integrate one or more of a central processing unit (CPU), a graphics processing unit (GPU), a neural-network processing unit (NPU), and a modem. The CPU is mainly configured to handle operating systems, user interfaces, and applications. The GPU is configured to render and draw the content required by a display screen. The NPU is configured to implement artificial intelligence (Al) functions. The modem is configured to perform wireless communication processing. It is understood that the modem can be implemented separately through a chip without being integrated into the processor 110.

In some embodiments, the processor 110 is configured to control working conditions of the at least two wireless links 130, and correspondingly, the processor 110 is a processor integrated with a wireless fidelity (Wi-Fi) chip. The Wi-Fi chip is a chip with dual Wi-Fi processing capabilities. In some embodiments, the Wi-Fi chip may be a dual band dual concurrent (DBDC) chip or a dual band simultaneous (DBS) chip.

In some embodiments, the memory 120 includes a random access memory (RAM). In other embodiments, the memory 120 includes a read-only memory (ROM). In some embodiments, the memory 120 includes a non-transitory computer-readable storage medium. The memory 120 is configured to store program codes. The memory 120 may include a storage program area and a storage data area. The storage program area may store instructions for implementing an operating system, instructions for at least one function (such as a touch function, a sound playing function, an image playing function, etc.), instructions for implementing various method embodiments described below, etc. The storage data area may store data (such as audio data, phone book) created according to the use of the wireless terminal 100 and the like.

In some embodiments, the memory 120 stores identifications of different access points connected by different wireless links 130, and identifications of the wireless links.

The at least two wireless links 130 are configured to connect different access points (APs) and receive downlink data from the APs. The different access points are within the same router.

In some embodiments, the wireless terminal 100 further includes a display screen. The display screen is a display component configured to display a user interface. In some embodiments, the display screen is a touch screen that allows users to perform touch operations on the display screen using their fingers, stylus, or any other suitable object. In some embodiments, the display screen is typically located on a front panel of the wireless terminal 100. In some embodiments, the display screen is designed to be a full-screen display, a curved screen, an irregular-shaped screen, a double-sided screen, or a foldable screen. In some embodiments, the display screen is designed to be a combination of a full-screen display and a curved screen, a combination of an irregular-shaped screen and a curved screen, and so on, without limitation in this embodiment.

In addition, those skilled in the art can understand that the structure of the wireless terminal 100 illustrated in the accompanying drawings does not limit the wireless terminal 100. The wireless terminal 100 may include more or fewer components than illustrated in the drawings, or certain components may be combined or arranged differently. In some embodiments, the wireless terminal 100 may further include a microphone, a speaker, an input unit, a sensor, an audio circuit, a module, a power supply, a Bluetooth module, and other components, which are not further described here.

To improve the throughput of wireless links and reduce network latency in the wireless terminal, a dual-band Wi-Fi acceleration method is typically adopted to enable the wireless terminal to connect to two APs simultaneously. As illustrated in FIG. 2, a wireless terminal integrated with a DBDC chip connects to different APs in a router through two wireless links via different traffic links.

After the wireless terminal is connected to the AP, data exchange between the wireless terminal and the AP is not required for most of the time. During the time when there is no data exchange between the wireless terminal and the AP, the AP periodically sends a beacon to the wireless terminal. This beacon is used to indicate whether the AP has any downlink data to send to the wireless terminal. Therefore, to save power, the wireless link of the wireless terminal is always in a power save state, the wireless terminal wakes up the wireless link only when it receives the beacon that indicates that the router has the downlink data to send to the wireless terminal. As illustrated in FIG. 3, the wireless terminal generates a receiving current at the time corresponding to each beacon, and receives the beacon through the receiving current.

After the wireless link is connected to the AP, when there is no data exchange, the wireless terminal sends a station sleep indication flag such as power management bit (PMB) to the AP. This PMB is carried in an empty data packet (null) transmitted between the wireless link and the AP, such as a null frame. This PMB is used to declare to the AP that the current wireless link has entered the power save state, and the wireless link then enters the power save state and is woken up at a fixed time (e.g., delivery traffic indication target beacon transmission time, DTIM TBTT) to receive the beacon sent by the AP. This beacon is used to indicate whether the wireless link needs to be fully woken up to receive the downlink data sent by the AP.

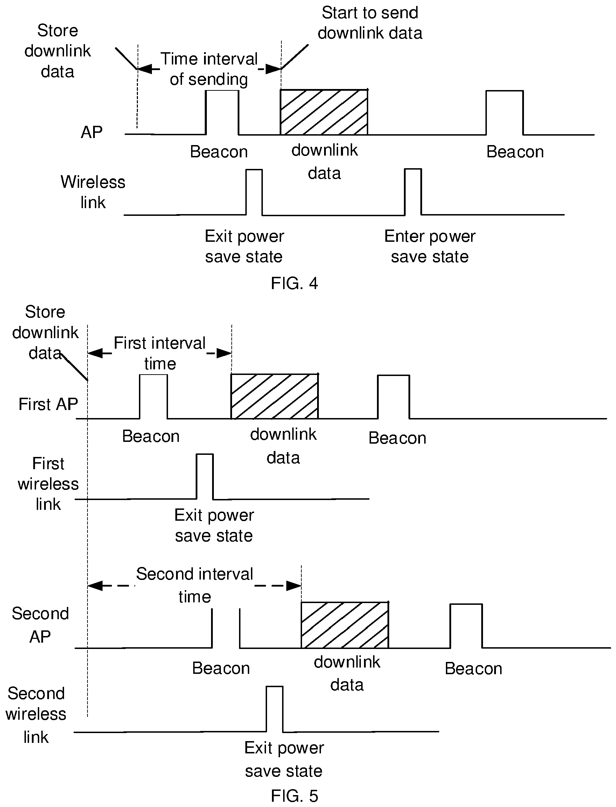

Correspondingly, when the AP receives the downlink data from the router, it determines the state of the wireless link corresponding to that AP. In response to the state of the wireless link corresponding to that AP is in a wake-up state, the downlink data is directly sent. In response to the state of the wireless link corresponding to that AP is in the power save state, the downlink data is stored, and when the next beacon is sent, the beacon is used to indicate to the wireless link that there is the downlink data waiting to be received. As illustrated in FIG. 4, after the wireless link receives the beacon, the wireless link is woken up and sends a data packet carrying the PMB to indicate that it is out of the power save state to an AP, thus the AP can send downlink data to the wireless link. After the wireless link receives the downlink data, it re-enters the power save state.

In the related art, two wireless links in a WIFI chip are connected to APs with different frequency bands. According to the protocol specification, each of the two wireless links monitors its own beacon, and determines whether to wake up and receive downlink data based on the monitored beacon. As illustrated in FIG. 5, when the two APs receive downlink data that needs to be sent, and both the first and second wireless links are in the power save state, a wake-up indication flag used to indicate data transmission in the next beacon of each of the first and second wireless links is set to 1. The wake-up indication flag is represented by a bitmap in a position of traffic indication map element (TIM IE) or delivery traffic indication (DTIM) in the beacon. Therefore, when there is data to be sent, the corresponding bitmap of the wireless link is set to 1. After receiving the wake-up indication flag in the beacon containing the wake-up information, the two wireless links are respectively sent indication information indicating that they have exited the power save state to the APs. After receiving the indication information, the APs send downlink data to the corresponding wireless links. Since different APs send beacons at different times, the wireless links are woken up at different times, causing relative latency when receiving downlink data.

In an embodiment of the present disclosure, for a wireless terminal with two wireless links, the beacon received through either of the two wireless links can synchronously wake up the two wireless links and notify the access points that their corresponding wireless links have been woken up. This enables the access points to synchronously send downlink data to the two wireless links, reducing the latency of sending downlink data to the wireless links by the access points.

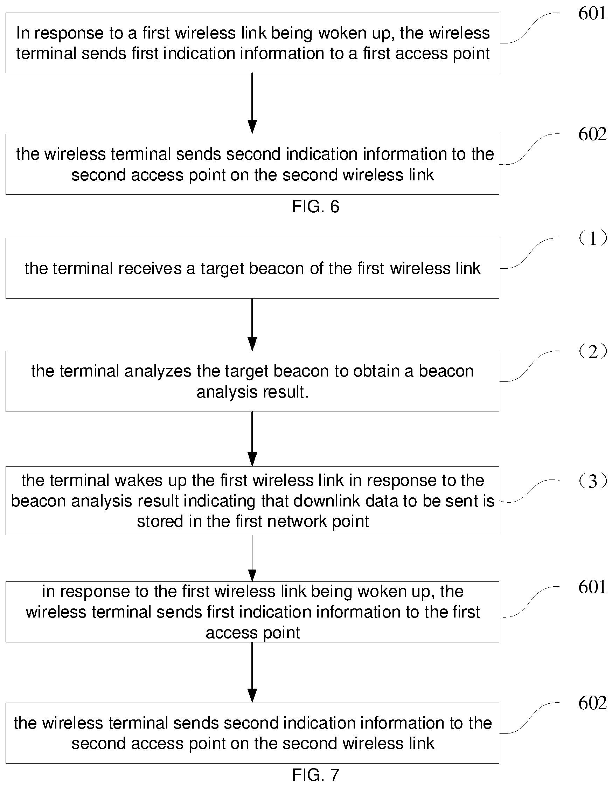

As illustrated in FIG. 6, which illustrates a flowchart of a method for controlling wireless links according to an alternative embodiment of the present disclosure. An executing entity in the embodiment can be a wireless terminal 100, which is implemented by a processor 110 in the wireless terminal 100 and relies on an operating system in the wireless terminal 100. Here, the embodiment is explained using the wireless terminal 100 as the executing entity. In the embodiment of the present disclosure, the wireless terminal sends indication information to the access point as an example, and the method includes block 601 and block 602.

At block 601: In response to a first wireless link being woken up, the wireless terminal sends first indication information to a first access point.

The first indication information is configured to indicate that the first wireless link is woken up. The first access point is an access point corresponding to the first wireless link. The first wireless link is a wireless link that the wireless terminal uses to connect to the first access point in a dual Wi-Fi communication mode. In the dual Wi-Fi communication mode, the wireless terminal further connects to a second access point via a second wireless link. The first wireless link and the second wireless link are processed by the same Wi-Fi chip and are connected to access points in the same or different frequency bands. In some embodiments, each of the first and second wireless links is a wireless link in the 2.4 GHz, 5 GHz, or 6 GHz frequency band, etc. In some embodiments, the first wireless link is a 2.4 GHz wireless link, and the second wireless link is a 5 GHz wireless link. In some embodiments, the first wireless link is a 5 GHz wireless link, and the second wireless link is a 2.4 GHz wireless link.

In this block, the wireless terminal receives a beacon sent by the first access point through the first wireless link. In response to a wake-up indication flag included in the beacon, which is used to indicate the wake-up of the wireless link, the wireless terminal wakes up the first wireless link through the Wi-Fi chip. The wireless terminal further sends a first indication information to the first access point to indicate that the first wireless link has been woken up.

It should be noted that a frequency of the first wireless link is different from that of the second wireless link, or the frequency of the first wireless link is the same as that of the second wireless link.

Furthermore, it should be noted that the first indication information sent by the first wireless link when entering the power save state is different from that sent when exiting the power save state. For example, when the first wireless link enters the power save state, the first indication information includes a bitmap with PMB=1, and when the first wireless link exits the power save state, the first indication information includes a bitmap with PMB=0.

Before this block, the wireless terminal determines whether the first wireless link is woken up, as illustrated in FIG. 7, which is achieved through the following blocks (1)-(2).

At block (1), the wireless terminal receives a beacon of the first wireless link from the first access point.

The beacon is generated by the first access point corresponding to the first wireless link. The first access point periodically sends beacons to the first wireless link. Accordingly, in the case where the first wireless link is in a power save state, the wireless terminal periodically wakes up the first wireless link to receive the beacons sent by the first access point. In the case where the first access point does not store information to be sent, the wake-up indication flag of the beacon is set to non-wake-up information to generate the beacon. In the case where the first access point stores information to be sent, the wake-up indication flag is set to wake-up information to generate the beacon.

The wake-up indication flag is the traffic indication map element (TIM IE) or delivery traffic indication message (DTIM) in the beacon. The TIM IE is configured to indicate that the access point has stored data to be sent to a certain wireless link, and the DTIM is configured to indicate that the access point has stored data to be sent to multiple wireless links. The DTIM can reuse the position of the TIM IE in the beacon.

In this block, the first access point generates the beacon and sends it to the wireless terminal through the first wireless link. Accordingly, the wireless terminal receives the beacon through the first wireless link.

At block (2), the wireless terminal wakes up the first wireless link in respond to the beacon.

The wireless terminal analyzes the beacon and determines whether to wake up the first wireless link based on an analysis result. When it is necessary to wake up the first wireless link, the steps of waking up the first wireless link are executed. This process is implemented through the following steps (2-1) to (2-2).

Step (2-1), the wireless terminal analyzes the beacon to obtain a beacon analysis result.

In this step, the wireless terminal analyzes the received beacon to obtain the beacon analysis result. The beacon analysis result is configured to indicate whether the first access point stores any information that needs to be sent. In response to the beacon analysis result indicating that there is no information to be sent in the first access point, the first wireless link is not be woken up. The wireless terminal may return to the power save state and wait for the next listening cycle to wake up the first wireless link and continue to listen for the beacon sent by the first access point. In response to the beacon analysis result indicating that there is information waiting to be sent in the first access point, the following step (2-2) is executed.

Step (2-2), the wireless terminal wakes up the first wireless link in response to the beacon analysis result indicating that there is information waiting to be sent in the first access point.

In this step, the wireless terminal wakes up the first wireless link and receives the information sent by the first access point through the first wireless link.

Additionally, since the first and second wireless links are controlled by the same Wi-Fi chip in the wireless terminal, when the first wireless link is woken up, the wireless terminal wakes up the second wireless link through the Wi-Fi chip to receive the downlink data sent by the second access point through the second wireless link. The process is as follows: in response to the first wireless link being woken up, the wireless terminal wakes up the second wireless link. The wireless terminal determines a link identifier of the second wireless link, generates a wake-up instruction based on the link identifier, and wakes up the second wireless link based on the wake-up instruction.

In this embodiment, the second access point and the first access point are access points in the same router. Alternatively, the second access point and the first access point are access points in different routers. In the embodiment of the present disclosure, this is not specifically limited.

In this implementation, the first wireless link wakes up the first wireless link and the second wireless link through the received beacon sent by the first access point, thus the wireless terminal can wake up two wireless links in the wireless terminal when receiving the wake-up instruction of any wireless link, ensuring the two wireless links can receive information.

At block 602: the wireless terminal sends second indication information to the second access point on the second wireless link.

The second indication information is configured to indicate that the second wireless link is out of the power save state.

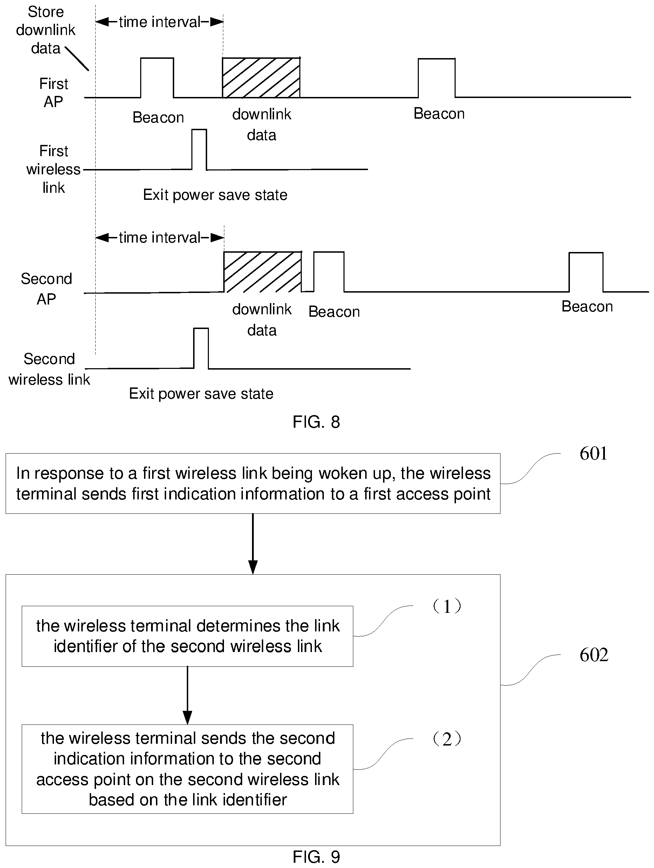

In this block, upon receiving the wake-up instruction from the first wireless link, the wireless terminal proactively sends a data packet including the second indication information on the second wireless link. As illustrated in FIG. 8, after receiving the beacon, the first wireless link sends the first indication information and the second indication information to the first access point and the second access point individually according to the beacon analysis result.

The wireless terminal generates a data packet based on the second indication information and sends the second indication information to the second access point by sending the data packet. As illustrated in FIG. 9, this process is implemented through the following blocks (1)-(2).

At block (1), the wireless terminal determines the link identifier of the second wireless link.

In this block, the wireless terminal obtains the link identifier of the second wireless link that is in the same Wi-Fi communication mode as the first wireless link in the corresponding Wi-Fi chip of the first wireless link and the second wireless link.

At block (2), the wireless terminal sends the second indication information to the second access point on the second wireless link based on the link identifier.

In this block, the wireless terminal sets a position corresponding to the link identifier in the data packet to a value corresponding to the second indication information. The data packet is any packet capable of carrying the second indication information. In some embodiments, the data packet can be an empty packet (null), or another 802.11 frame structure management frame, data frame, and control frame, etc. In the embodiment of the present disclosure, the format of the data packet is not specifically limited. The wireless terminal sends the data packet to the second access point through the second wireless link.

In the embodiment, the wireless terminal generates the second indication information used to indicate that the second wireless link is woken up based on the link identifier of the second wireless link, thereby informing the second access point that the second wireless link has exited the power save state. This allows that the two wireless links can receive information sent by the access points at the same time, reducing the time interval for the two wireless links to receive information in the dual Wi-Fi communication mode.

After the first wireless link and the second wireless link are woken up, the wireless terminal receives information from the first access point on the first wireless link and from the second access point on the second wireless link.

Continuing to refer to FIG. 8, after receiving the downlink data, the first and second wireless links enter the power save state again. Correspondingly, the first access point and the second access point continue to send beacons periodically.

In the embodiment of the present disclosure, when the first wireless link is woken up, indication information indicating that the wireless link is woken up is sent to both the first wireless network connected to the first wireless link and the second wireless network connected to the second wireless link. This synchronously wakes up the two wireless links, allowing the two wireless links to receive information from the access points at the same time, reducing the time interval for the two wireless links to receive information in the dual Wi-Fi communication mode.

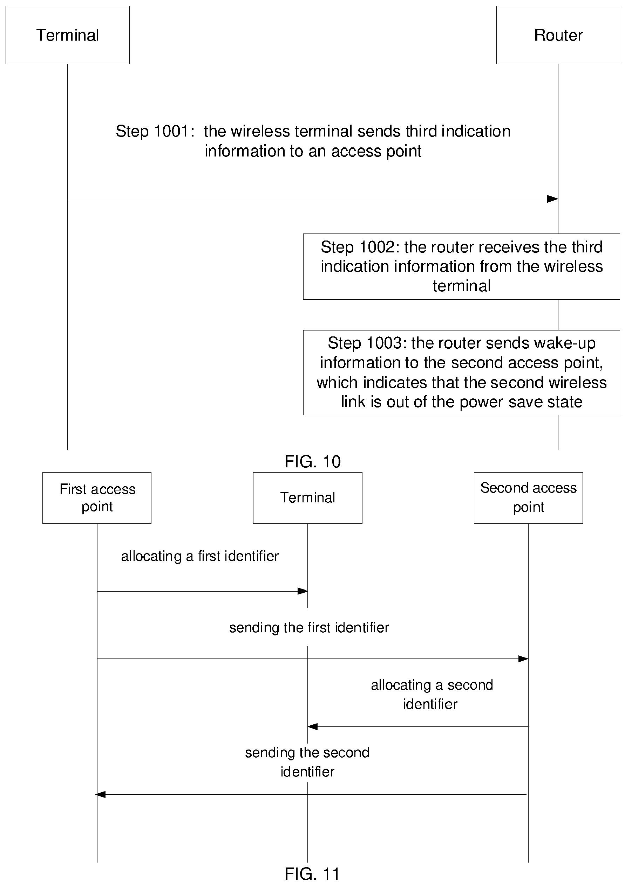

FIG. 10 illustrates a flowchart of a method for controlling wireless links according to an alternative embodiment of the present disclosure. An executing entity in the embodiment can be the wireless terminal 100, the embodiment is executed by the processor 110 in the wireless terminal 100 and relies on an operating system in the wireless terminal 100 to implement. In the embodiment of the disclosure, an example of the wireless terminal sending the indication information to the first access point and sending a wake-up information to the second access point through the first access point is used to illustrate the method. The method includes the following steps.

Step 1001: the wireless terminal sends third indication information to an access point.

The third indication information includes first sub-information and second sub-information, the first sub-information indicates state information of the wireless terminal, and the second sub-information indicates whether the wireless terminal is in a dual Wi-Fi communication mode. The state information of the wireless terminal refers to whether the wireless link of the wireless terminal is awake or asleep. In the dual Wi-Fi communication mode, the wireless terminal includes a first wireless link and a second wireless link. The first wireless link and the second wireless link are wireless links for data interaction between the wireless terminal and different access points in the dual Wi-Fi communication mode. The first wireless link performs data interaction with the first access point, and the second wireless link performs data interaction with the second access point. The first access point and the second access point are access points in the same router, which is not specifically limited in this embodiment.

In one implementation, after two wireless links of the wireless terminal establish network connections with different access points in the router, the router generates two wireless link identifiers, and allocates the identifiers to the wireless terminal through the first wireless link and the second wireless link. Accordingly, before this step, the router allocates the identifiers to the wireless terminal, and interacts the identifiers between the first access point and the second access point. As illustrated in FIG. 11, the process is as follows: a first access point in a router allocates a first identifier to the wireless terminal through a first wireless link, and sends the first identifier to the second access point and receiving a second identifier allocated to the wireless terminal by the second wireless link from the second access point. Correspondingly, the second access point in the router receives the first identifier sent by the first access point and allocates the second identifier to the wireless terminal through the second wireless link, and sends the second identifier to the first access point, and receives the first identifier allocated to the wireless terminal by the first wireless link from the first access point.

In this implementation, the developer modifies sleep indication rules of access points and wireless links in advance. The second sub-information is added to the third indication information, and the added second sub-information indicates that the current third indication information is used to indicate whether the current wireless link is in the dual Wi-Fi communication mode.

Accordingly, the wireless terminal generates the third indication information based on current different scenarios and different preset conditions of the wireless terminal. This process is implemented through the following steps (1)-(2).

(1) The wireless terminal determines the first sub-information and the second sub-information.

The first sub-information indicates the state information of the wireless terminal, and the second sub-information indicates the Wi-Fi communication mode applied by the wireless terminal. The second sub-information is the new sub-information, for example, the second sub-information is the new dual-link interface string (e.g., dual_link bit). The first sub-information is an original sleep indication flag, for example, PMB.

In this step, the wireless terminal determines the second sub-information based on the current Wi-Fi communication mode. The first sub-information is determined based on the current state of the first wireless link and the second wireless link. Refer to Table 1, in response to that the second sub-information is a first value, the second sub-information is used to indicate that the current third indication information represents the state of the current network link, in response to that the second sub-information is a second value, and the second sub-information is used to indicate that the current third indication information represents the states of the two wireless links in the current dual Wi-Fi communication mode. The first value and the second value are set as needed, which is not specifically limited in the embodiment of the application. In some embodiments, the first value is 0 or 1, and the second value is 0 or 1.

**Table 1**

| First sub-information | Second Sub-information | Meaning |
|---|---|---|
| 1 | 0 | The wireless link sending the third indication information enters a power save state. |
| 0 | 0 | The wireless link sending the third indication information is out of the power save state. |
| 1 | 1 | Multiple wireless links in the dual Wi-Fi communication mode where the wireless link sending the third indication information is located enter the power save state. |
| 0 | 1 | Multiple wireless links in the dual Wi-Fi communication mode where the wireless link sending the third indication information is located are out of the power save state. |

Refer to Table 1, when the second sub-information is 0, it is determined that the current third indication information indicates the state of the wireless link that sent the third indication information; When the second sub-information is 1, it is determined that the current third indication information indicates the states of the wireless links in the dual Wi-Fi communication mode where the wireless link sending the third indication information is located. When the first sub-information is 0, it is used to indicate that the wireless link is out of the power save state and woken up; When the second sub-information is 1, it is used to indicate that the wireless link enters the power save state.

In this embodiment, the two sub-information indicate that all wireless links of the wireless terminal enter the power save state in the dual Wi-Fi communication mode, or only the wireless link that sent the indication information enters the power save state in the single Wi-Fi communication mode. The wireless terminal determines the second sub-information based on the current communication mode, and determines the first sub-information based on the state of the wireless link. In response to the wireless terminal only needing to indicate the state of the current wireless link through the third indication information, the wireless terminal determines that the second sub-information is 0; In response to the wireless terminal needing to indicate the states of the current wireless link and other wireless links in the dual Wi-Fi communication mode through the third indication identifier, the wireless terminal determines that the second sub-information is 1. The wireless terminal determines the first sub-information based on the information of entering or exiting the power save state to be executed at present. In response to the wireless link entering the power save state, the value of the first sub-information is 1; In response to the wireless link exiting the power save state, the value of the first sub-information is 0.

In some embodiments, the wireless link entering the power save state includes that the wireless link enters the power save state after receiving the information sent by the access point. Accordingly, the wireless link sends the third indication information to the access point, and the third indication information includes the first sub-information and the second sub-information, the first sub-information indicates that the wireless terminal is in the power save state, and the second sub-information indicates that the wireless terminal is in the dual Wi-Fi communication mode. In some embodiments, in response to determining the wireless terminal enters the power save state, the wireless terminal sends the indication information to the access point, the first sub-information indicates that the wireless terminal enters the power save state and the second sub-information indicates whether the wireless terminal is in the dual Wi-Fi communication mode.

In other embodiments, when a predetermined condition is met, the indication information is sent to the access point, the indication information includes first sub-information and second sub-information, the first sub-information indicates that the wireless terminal is out of the power save state, and the second sub-information indicates that the wireless terminal is in the dual Wi-Fi communication mode. The predetermined condition includes: the access point wakes up the wireless link; Or the access point wakes up the wireless link and sends downlink data to the wireless link through the wireless link; Or the wireless terminal actively wakes up the wireless link.

(2) The wireless terminal generates the third indication information based on the first sub-information and the second sub-information.

In this implementation, by changing the structural type of the third indication information, the third indication information can indicate the states of the wireless links in the dual Wi-Fi communication mode, thus the states of two wireless links can be indicated, and the two wireless links can simultaneously receive the data sent by the access points, thus reducing the time interval for receiving information.

Step 1002, the router receives the third indication information from the wireless terminal.

At this step, the router receives the third indication information sent by the wireless terminal according to the first access point corresponding to the first wireless link. The router is the router where the first access point is located. In some embodiments, multiple access points are included in the router. The frequency bands corresponding to the multiple access points are the same or different. For example, the multiple access points correspond to frequency bands corresponding to 2.4GHz, 5GHz or 6GHz respectively.

In some embodiments, when the third indication information is used to indicate that the current wireless link exits the power save state or enters the power save state, the router directly records the state of the wireless link corresponding to the third indication information as the wake-up state or the power save state.

In some embodiments, the third indication information is used to indicate that the current wireless terminal is in the dual Wi-Fi communication mode, that is, the first sub-information and the second sub-information indicate that all wireless links of the wireless terminal are out of the power save state. The router performs step 1003 to send wake-up information to the second access point.

Step 1003: the router sends wake-up information to the second access point, which indicates that the second wireless link is out of the power save state.

In this step, after the router determines that the third indication information indicates that the current first wireless link and the second wireless link are woken up, the router determines the link identifier of the first wireless link based on the first wireless link that received the third indication information, determines the second identifier of the second wireless link that is in the same dual Wi-Fi communication mode with the first wireless link based on the pre-stored correspondence of wireless links in the dual Wi-Fi communication mode, and sends the wake-up information to the second access point based on the second identifier corresponding to the second wireless link. This process is realized by the following steps (1)-(2).

(1) The router analyzes the third indication information to obtain an analysis result.

The router analyzes the third indication information to obtain the first sub-information and the second sub-information in the third indication information. The router determines the current states of the first wireless link and the second wireless link in the indication result of the third indication information according to the first sub-information and the second sub-information.

(2) In response to the analysis result that the first sub-information indicates that the wireless terminal is out of the power save state and the second sub-information indicates that the wireless terminal is in the dual Wi-Fi communication mode, the router determines that the analysis result indicates that the current first wireless link and the second wireless link are woken up.

Referring to Table 1, when the second sub-information is 0, it is determined that the current third indication information indicates the state of the wireless link that currently sends the third indication information; When the second sub-information is 1, it is determined that the current third indication information indicates the states of the wireless links in the dual Wi-Fi communication mode where the wireless link sending the third indication information is located. When the first sub-information is 0, it is used to indicate that the wireless link is out of the power save state and woken up; When the first sub-information is 1, it is used to indicate that the wireless link enters the power save state. In this step, when the second sub-information is 1 and the first sub-information is 0, the router determines that the third indication information indicates that the current first wireless link and the second wireless link are woken up.

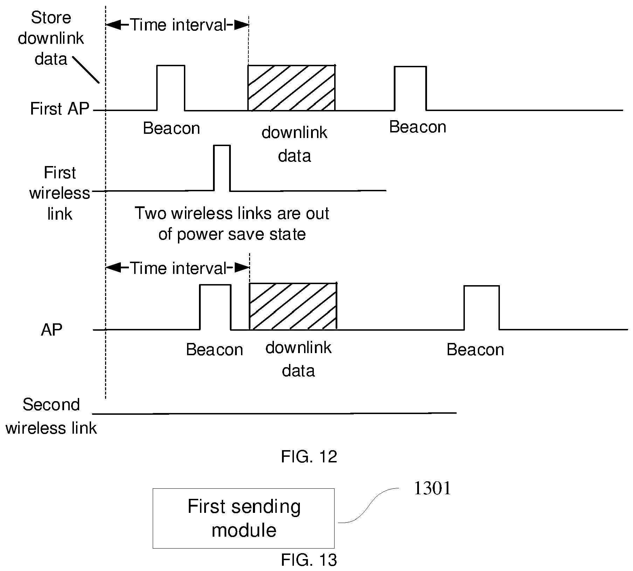

After both the first wireless link and the second wireless link are woken up, the first access point of the router sends information to the wireless terminal in the first wireless link; The second access point sends information to the wireless terminal in the second wireless link. As illustrated in FIG. 12, after the first wireless link feeds back the third indication information, the router sends downlink data through the first access point and the second access point.

It should be noted that after receiving the information, the first wireless link and the second wireless link can re-enter the power save state, and send a third indication information to the router to instruct the first wireless link or the second wireless link to enter the power save state. In some embodiments, the first wireless link and the second wireless link send third indication information to the first access point and the second access point, respectively. The second sub-information of the third indication information is 0 and the first sub-information is 1, which is used to indicate that the wireless link sending the third indication information is in the power save state. In some embodiments, any one of the first wireless link and the second wireless link sends the third indication information to its corresponding access point. The second sub-information of the third indication information is 1, and the first sub-information of the third indication information is 1, which is used to indicate that the wireless links in the dual Wi-Fi communication mode where the wireless link sending the third indication information is located enter the power save state.

In this implementation, by modifying the communication protocol, the same indication information is used to indicate the states of different wireless links to different access points in the router, thus any wireless link is woken up under the dual Wi-Fi communication mode, and the indication information fed back by the wireless link indicates that multiple wireless links in the router are woken up, thus the access points can simultaneously send downlink data to the wireless links, thereby reducing the time interval for receiving downlink data.

As illustrated in FIG. 13, which illustrates a structural block diagram of an apparatus for controlling wireless links according to an embodiment of the present disclosure. The apparatus for controlling the wireless links can be realized as all or a part of the processor 110 by software, hardware or a combination of both. The apparatus includes:
a sending module 1301, configured to send indication information on a second wireless link to a second access point corresponding to the second wireless link in response to the first wireless link being woken up, the indication information being used to indicate that the second wireless link is out of a power save state.

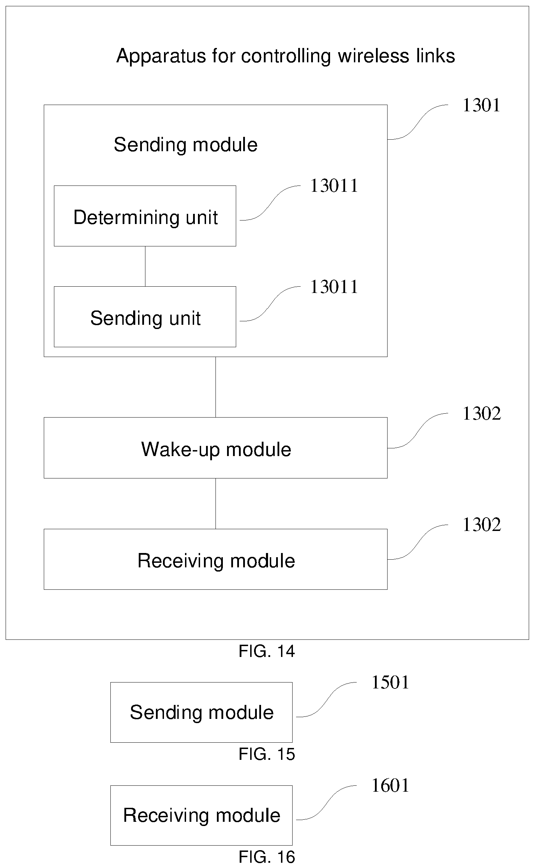

In some embodiments, as illustrated in FIG. 14, the apparatus further includes:
a wake-up module 1302, configured to wake up the second wireless link in response to the first wireless link being woken up.

In some embodiments, as illustrated in FIG. 14, the sending module 1301 includes:
a determining unit 13011, configured to determine a link identifier of the second wireless link; and
a sending unit 13012, configured to send the indication information to the second access point on the second wireless link based on the link identifier.

In some embodiments, as illustrated in FIG. 14, the apparatus further includes:
a receiving module 1303, configured to receive a beacon of the first wireless link from a first access point corresponding to the first wireless link.

The wake-up module 1302 is configured to wake up the first wireless link in response to the beacon.

In some embodiments, a frequency of the first wireless link is different from a frequency of the second wireless link.

In some embodiments, the frequency of the first wireless link is the same as the frequency of the second wireless link.

In some embodiments, the first wireless link is a 2.4G wireless link and the second wireless link is a 5G wireless link.

In some embodiments, the first wireless link is a 5G wireless link, and the second wireless link is a 2.4G wireless link.

In some embodiments, the receiving module 1303 is further configured to receive information from the second access point on the second wireless link.

In the embodiment of the present disclosure, for a wireless terminal with two wireless links, the two wireless links can be woken up synchronously through the beacon received by any wireless link, and the two access points are synchronously notified that their corresponding wireless links have been woken up, thus the access points can send downlink data to the two wireless links synchronously, and the latency of sending downlink data to the wireless links by the access points is reduced.

As illustrated FIG. 15, which illustrates a structural block diagram of an apparatus for controlling wireless links according to an embodiment of the present disclosure. The apparatus for controlling the wireless link can be realized as all or a part of the processor 110 by software, hardware or a combination of both. The apparatus includes:
a sending module 1501, configured to send indication information to an access point, which includes first sub-information and second sub-information, the first sub-information indicating state information of the wireless terminal, and the second sub-information indicating whether the wireless terminal is in a dual Wi-Fi communication mode.

In some embodiments, when the wireless terminal is in the dual Wi-Fi communication mode, the sending module 1501 is configured to send the indication information to the access point when a predetermined condition is met, and the indication information includes the first sub-information and the second sub-information, the first sub-information indicates that the wireless terminal is out of the power save state and the second sub-information indicates that the wireless terminal is in the dual Wi-Fi communication mode.

In some embodiments, the predetermined condition includes:
the access point wakes up the wireless link; or
the access point wakes up that wireless link and sends downlink data to the wireless link through the wireless link; or
the wireless terminal actively wakes up the wireless link.

In some embodiments, the sending module is further configured to send the indication information to the access point in response to determining the wireless terminal enters the power save state, the first sub-information indicates that the wireless terminal enters the power save state, and the second sub-information indicates whether the wireless terminal is in the dual Wi-Fi communication mode.

In the embodiment of the present disclosure, for a wireless terminal with two wireless links, the two wireless links can be woken up synchronously through the beacon received by any wireless link, and the two access points are synchronously notified that their corresponding wireless links have been woken up, thus the access points can send downlink data to the two wireless links synchronously, and the latency of sending downlink data to the wireless links by the access points is reduced.

As illustrated in FIG. 16, which illustrates a structural block diagram of an apparatus for controlling wireless links according to an embodiment of the present disclosure. The apparatus for controlling wireless links can be realized as all or a part of the processor 110 by software, hardware or a combination of both. The apparatus includes:
a receiving module 1601, configured to receive indication information from a wireless terminal, which includes first sub-information and second sub-information, the first sub-information indicates that the wireless terminal is out of a power save state, and the second sub-information indicates that the wireless terminal is in a dual Wi-Fi communication mode.

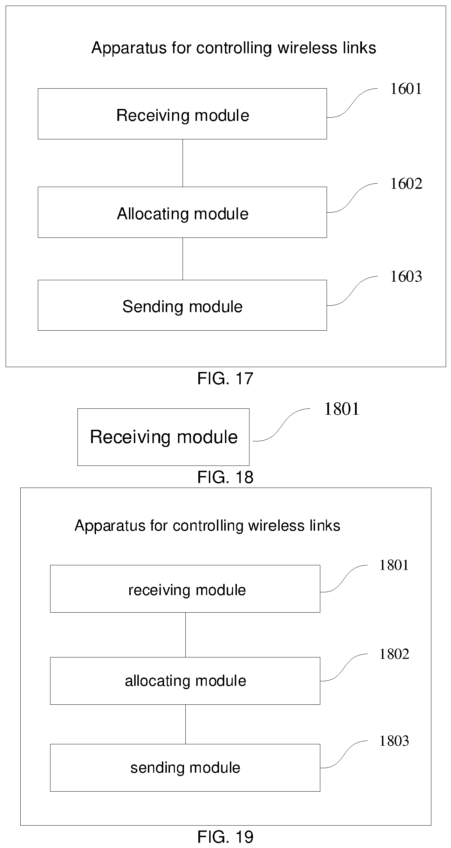

In some embodiments, as illustrated in FIG. 17, the apparatus further includes:
an allocating module 1602, configured to allocate a first identifier to the wireless terminal through a first wireless link; and
a sending module 1603, configured to send the first identifier to the second access point and receive a second identifier allocated to the wireless terminal by the second wireless link from the second access point.

In some embodiments, the sending module is further configured to send wake-up information to the second access point, which indicates that the second wireless link is out of the power save state.

In the embodiment of the present disclosure, for a wireless terminal with two wireless links, the two wireless links can be woken up synchronously through the beacon received by any wireless link, and the two access points are synchronously notified that their corresponding wireless links have been woken up, thus the access points can send downlink data to the two wireless links synchronously, and the latency of sending downlink data to the wireless links by the access points is reduced.

As illustrated in FIG. 18, which illustrates a structural block diagram of an apparatus for controlling wireless links according to an embodiment of the present disclosure. The apparatus for controlling wireless links can be realized as all or a part of the processor 110 by software, hardware or a combination of both. The apparatus includes:
a receiving module 1801, configured to receive wake-up information from a first access point, which indicates that a second wireless link of the wireless terminal corresponding to a second access point is out of a power save state.

In some embodiments, as illustrated in FIG. 19, the apparatus further includes:
an allocating module 1802, configured to allocate a second identifier to the wireless terminal through the second wireless link; and
a sending module 1803, configured to send the second identifier to the first access point and receive a first identifier allocated to the wireless terminal by the first wireless link from the first access point.

In some embodiments, the sending module 1803 is further configured to send information to the wireless terminal in the second wireless link.

In the embodiment of the present disclosure, for a wireless terminal with two wireless links, the two wireless links can be woken up synchronously through the beacon received by any wireless link, and the two access points are synchronously notified that their corresponding wireless links have been woken up, thus the access points can send downlink data to the two wireless links synchronously, and the latency of sending downlink data to the wireless links by the access points is reduced.

An embodiment of the present disclosure further provides a computer-readable medium, which stores at least one program code, and the at least one program code is loaded and executed by a processor to implement the method for controlling wireless links as described in the above embodiments.

An embodiment of the present disclosure further provides a computer program product, which stores at least one program code, and the at least one program code is loaded and executed by a processor to implement the method for controlling wireless links as described in the above embodiments.

Those skilled in the art should be able to realize that in one or more of the above embodiments, the functions described in the embodiments of the present disclosure can be realized by hardware, software, firmware or any combination thereof. When implemented in software, these functions can be stored in a computer-readable medium or transmitted as one or more instructions or codes on the computer-readable medium. Computer-readable media include computer storage media and communication media, where communication media includes any media that facilitates the transfer of computer programs from one place to another. A storage medium is any available medium that can be accessed by a general-purpose or special-purpose computer.

The above is only illustrated embodiments of the present disclosure, and it is not used to limit the present disclosure. Any modification, equivalent substitution, improvement, etc. made within the spirit and principle of the present disclosure should be included in the scope of protection of the present disclosure.

## Claims

1. A method for controlling wireless links in a wireless terminal, comprising:
sending, in response to a first wireless link being woken up, indication information to a second access point corresponding to a second wireless link on the second wireless link;
wherein the indication information is configured to indicate that the second wireless link is out of a power save state.

2. The method according to claim 1, wherein the method further comprises:
waking up the second wireless link in response to the first wireless link being woken up.

3. The method according to claim 1, wherein the sending indication information to a second access point corresponding to the second wireless link on a second wireless link, comprises:
determining a link identifier of the second wireless link; and
sending, based on the link identification, the indication information to the second access point on the second wireless link.

4. The method according to claim 1, wherein a process that the first wireless link is woken up comprises:
receiving a beacon of the first wireless link from a first access point corresponding to the first wireless link; and
waking up the first wireless link in response to the beacon.

5. The method according to any one of claims 1-4, wherein a frequency of the first wireless link is different from that of the second wireless link.

6. The method according to any one of claims 1-4, wherein a frequency of the first wireless link is same as that of the second wireless link.

7. The method according to claim 5, wherein the first wireless link is a 2.4G wireless link, and the second wireless link is a 5G wireless link; or the first wireless link is a 5G wireless link, and the second wireless link is a 2.4G wireless link.

8. The method according to claim 1, wherein the method further comprises:
receiving information from the second access point on the second wireless link.

9. An apparatus for controlling wireless links in a wireless terminal, comprising:
a sending module, configured to send, in response to a first wireless link being woken up, indication information to a second access point corresponding to a second wireless link on the second wireless link;
wherein the indication information is configured to indicate that the second wireless link is out of a power save state.

10. The apparatus according to claim 9, further comprising:
a wake-up module, configured to wake up the second wireless link in response to the first wireless link being woken up.

11. The apparatus according to claim 9, wherein the sending module comprises:
a determining unit, configured to determine a link identifier of the second wireless link; and
a sending unit, configured to send, based on the link identifier, the second indication information to the second access point on the second wireless link.

12. The apparatus according to claim 9, further comprising:
a receiving module, configured to receive a beacon of the first wireless link from a first access point corresponding to the first wireless link; and
a wake-up module, configured to wake up the first wireless link in response to the beacon.

13. The apparatus according to any one of claims 9-12, wherein a frequency of the first wireless link is different from that of the second wireless link.

14. The apparatus according to any one of claims 9-12, wherein a frequency of the first wireless link is the same as that of the second wireless link.

15. The apparatus according to claim 13, wherein the first wireless link is a 2.4G wireless link and the second wireless link is a 5G wireless link; or the first wireless link is a 5G wireless link, and the second wireless link is a 2.4G wireless link.

16. The apparatus according to claim 1, wherein the receiving module is further configured to receive information from the second access point on the second wireless link.

17. A method for controlling wireless links in a wireless terminal, comprising:
sending indication information to an access point, wherein the indication information comprises first sub-information and second sub-information, the first sub-information indicates state information of the wireless terminal, and the second sub-information indicates whether the wireless terminal is in a dual Wi-Fi communication mode.

18. The method according to claim 17, wherein when the wireless terminal is in the dual Wi-Fi communication mode, the sending indication information to an access point comprises:
sending, in response to a predetermined condition is met, the indication information to the access point; wherein the indication information comprises the first sub-information and the second sub-information, the first sub-information indicates that the wireless terminal is out of a power save state, and the second sub-information indicates that the wireless terminal is in the dual Wi-Fi communication mode.

19. The method according to claim 18, wherein the predetermined condition comprises:
waking up a wireless link through the access point; or
waking up the wireless link through the access point and sending downlink data to the wireless link through the wireless link; or
actively waking up the wireless link through the wireless terminal.

20. The method according to claim 17, wherein the sending indication information to an access point further comprises:
sending, in response to determining that the wireless terminal enters a power save state, the indication information to the access point; wherein the first sub-information indicates that the wireless terminal enters the power save state, and the second sub-information indicates whether the wireless terminal is in the dual Wi-Fi communication mode.

21. A method for controlling wireless links in a first access point in a router in a dual Wi-Fi communication mode, wherein the router further comprises a second access point, and the method comprises:
receiving indication information from a wireless terminal, wherein the indication information comprises first sub-information and second sub-information, the first sub-information indicates that the wireless terminal is out of a power save state, and the second sub-information indicates that the wireless terminal is in the dual Wi-Fi communication mode.

22. The method according to claim 21, wherein before the receiving indication information from a wireless terminal, the method further comprises:
allocating a first identifier to the wireless terminal through a first wireless link; and
sending the first identifier to the second access point, and receiving a second identifier allocated to the wireless terminal by a second wireless link from the second access point.

23. The method according to claim 22, further comprising:
sending wake-up information to the second access point, the wake-up information indicating that the second wireless link is out of the power save state.

24. A method for controlling wireless links in a second access point in a router in a dual Wi-Fi communication mode, wherein the router further comprises a first access point, and the method comprises:
receiving wake-up information from the first access point, wherein the wake-up information indicates that a second wireless link of the wireless terminal corresponding to the second access point is out of a power save state.

25. The method according to claim 24, wherein before the receiving wake-up information from the first access point, the method further comprises:
allocating a second identifier to the wireless terminal through a second wireless link; and
sending the second identifier to the first access point, and receiving a first identifier allocated to the wireless terminal by a first wireless link from the first access point.

26. The method according to claim 24 or 25, further comprising:
sending information to the wireless terminal in the second wireless link.

27. An apparatus for controlling wireless links in a wireless terminal, comprising:
a sending module, configured to send indication information to an access point; wherein the indication information comprises first sub-information and second sub-information, the first sub-information indicates state information of the wireless terminal, and the second sub-information indicates whether the wireless terminal is in a dual Wi-Fi communication mode.

28. The apparatus according to claim 27, wherein when the wireless terminal is in the dual Wi-Fi communication mode, the sending module is configured to send, in response to a predetermined condition is met, the indication information to the access point; the indication information comprises the first sub-information and the second sub-information, the first sub-information indicates that the wireless terminal is out of the power save state and the second sub-information indicates that the wireless terminal is in the dual Wi-Fi communication mode.

29. The apparatus of claim 28, wherein the predetermined condition comprises:
the access point waking up a wireless link; or
the access point waking up the wireless link and sending downlink data to the wireless link through the wireless link; or
the wireless terminal actively waking up the wireless link.

30. The apparatus according to claim 27, wherein the sending module is further configured to send, in response to determining that the wireless terminal enters the power save state, the indication information to the access point; the first sub-information indicates that the wireless terminal enters the power save state, and the second sub-information indicates whether the wireless terminal is in the dual Wi-Fi communication mode.

31. An apparatus for controlling wireless links in a first access point in a router in a dual Wi-Fi communication mode, wherein the router further comprises a second access point, and the apparatus comprises:
a receiving module, configured to receive indication information from a wireless terminal, wherein the indication information comprises first sub-information and second sub-information, the first sub-information indicates that the wireless terminal is out of a power save state, and the second sub-information indicates that the wireless terminal is in the dual Wi-Fi communication mode.

32. The apparatus according to claim 31, further comprising:
an allocating module, configured to allocate a first identifier to the wireless terminal through a first wireless link; and
a sending module, configured to send the first identifier to the second access point and receive a second identifier allocated to the wireless terminal by a second wireless link from the second access point.

33. The apparatus according to claim 32, wherein the sending module is further configured to send wake-up information to the second access point, the wake-up information indicating that the second wireless link is out of the power save state.

34. An apparatus for controlling wireless links in a second access point in a router in a dual Wi-Fi communication mode, wherein the router further comprises a first access point, and the apparatus comprises:
a receiving module, configured to receive wake-up information from the first access point, the wake-up information indicating that the second wireless link of the wireless terminal corresponding to the second access point is out of the power save state.

35. The apparatus according to claim 34, further comprising:
an allocating module, configured to allocate a second identifier to the wireless terminal through a second wireless link; and
a sending module, configured to send the second identifier to the first access point and receive a first identifier allocated to the wireless terminal by a first wireless link from the first access point.

36. The apparatus according to claim 34 or 35, wherein the sending module is further configured to send information to the wireless terminal in the second wireless link.

37. A wireless terminal comprising a processor and a memory; wherein the memory stores at least one instruction, the at least one instruction is configured to be executed by the processor to implement the method for controlling wireless links according to any one of claims 1 to 8; or, the at least one instruction is configured to be executed by the processor to implement the method for controlling wireless links according to any one of claims 17 to 20.

38. A router comprising a processor and a memory; wherein the memory stores at least one instruction, and the at least one instruction is configured to be executed by the processor to implement the method for controlling wireless links according to any one of claims 21 to 23 or any one of claims 24 to 26.

39. A computer-readable storage medium storing at least one instruction, wherein the at least one instruction is configured to be executed by a processor to implement the method for controlling wireless links according to any one of claims 1-8; or the at least one instruction is configured to be executed by the processor to implement the method for controlling wireless links according to any one of claims 17 to 20.

40. A computer-readable storage medium storing at least one instruction, wherein the at least one instruction is configured to be executed by a processor to implement the method for controlling wireless links according to any one of claims 21 to 23 or any one of claims 24 to 26.
